# EUROPEAN PATENT SPECIFICATION

(11) **EP 3 178 874 B1**
(45) Date of publication and mention of the grant of the patent: **07.08.2019**
(21) Application number: 16200696.9
(22) Date of filing: 25.11.2016
(51) Int. Cl.: C08J 11/10, C08J 11/12, C08J 11/16

(54) **METHOD FOR RECOVERING FIBER ASSEMBLY FROM THERMOSETTING RESIN COMPOSITE MATERIALS AND RECOVERED FIBER ASSEMBLY THEREBY**
VERFAHREN ZUR RÜCKGEWINNUNG EINER FASERANORDNUNG AUS WÄRMEHÄRTENDEN HARZVERBUNDWERKSTOFFEN UND DADURCH ZURÜCKGEWONNENE FASERANORDNUNG
PROCÉDÉ PERMETTANT DE RÉCUPÉRER UN ENSEMBLE DE FIBRES À PARTIR DE MATÉRIAUX COMPOSITES À BASE DE RÉSINE THERMODURCISSABLE ET ENSEMBLE DE FIBRES AINSI RÉCUPÉRÉ

(30) Priority: 11.12.2015 KR 20150176914
(43) Date of publication of application: 14.06.2017
(73) Proprietor: Korea Institute of Science and Technology, Seoul 02792 (KR)
(72) Inventor: GOH, Munju, Jeollabuk-do 55324 (KR); JUNG, Jin, Jeollabuk-do 55324 (KR); YU, Jin Won, Jeollabuk-do 55324 (KR); YOU, Nam Ho, Jeollabuk-do 55324 (KR); YEO, Hyeonuk, Jeollabuk-do 55324 (KR); YOUN, Sang Jun, Jeollabuk-do 55324 (KR); KU, Bon-Cheol, Jeollabuk-do 55324 (KR)
(74) Representative: advotec.

(56) References cited:
- WO-A1-2014/179939
- CN-A- 104 592 546
- DE-A1-102013 200 482
- JP-A- 2011 122 032
- DATABASE WPI Week 200822 Thomson Scientific, London, GB; AN 2008-D09637 XP002769008, & JP 2008 050521 A (MATSUSHITA ELECTRIC WORKS LTD) 6 March 2008 (2008-03-06)
- DATABASE WPI Week 200806 Thomson Scientific, London, GB; AN 2008-A88000 XP002769009, & JP 2007 254683 A (MATSUSHITA ELECTRIC WORKS LTD) 4 October 2007 (2007-10-04)

## Description

### BACKGROUND

### 1. Field

The present disclosure relates to a method and an apparatus for recovering a fiber assembly from a thermosetting resin composite material, and a fiber assembly obtained thereby.

### 2. Description of the Related Art

Plastics may be classified into thermoplastic resins and thermosetting resins. Among those, thermosetting resins are used widely for composite materials such as carbon fiber reinforced plastic (CFRP) using carbon fibers as filler materials. Since composite materials such as CFPR etc. have been increasingly in use in various industrial fields, such as cars, space avitation and new energy, etc. needs for recycling such composite materials are also increasing accordingly.

However, a thermosetting resin, once cured, is not molten even under heating and is sparingly soluble in a solvent. Thus, it is difficult to recycle a thermosetting resin. Typical examples of thermosetting resins include polyurethane, epoxy resins, etc.

An epoxy resin is a thermosetting resin including a network polymer formed by ring-opening of epoxy groups generated when mixing an epoxy monomer having two or more epoxy groups in its molecule with a curing agent. Such an epoxy resin has excellent chemical resistance and durability, shows a low volumetric shrinkage upon curing, and thus is used as a highly functional raw material essential for various industrial fields, including adhesives, paints, electronic/electric industry, civil engineering/architectural industry, or the like.

An epoxy resin which is a thermosetting resin, once cured, forms a three-dimensional crosslinked network structure, which has strong resistance against chemicals and thus may advantageously imparts materials with high durability and anticorrosive property, but, on the other hand, there are also demerits that treating and reutilizing the materials after use are very difficult.

Therefore, most cured epoxy resin materials such as CFRP etc. have been treated by reclamation. This is significant waste in terms of cost and may cause severe environmental pollution.

Currently, the most generally used method for decomposing a composite material and for separating filler materials, such as carbon fibers, etc. used in combination is a pyrolysis process. Japanese companies, such as Toray, Teijin and Mitsubishi, etc. take the lead in its treatment and recycle based on pyrolysis in an amount of 1000 tons per year.

Meanwhile, studies have been conducted about regeneration of a cured material, such as epoxy resin, using a chemical process.

However, according to the observation by the present inventors, separation of fillers, such as carbon fibers, etc., through such pyrolysis and chemical processes requires a pretreatment process including preliminarily crushing a thermosetting resin composite material, such as CFRP, etc, mechanically. While CFRP is crushed to a size of several millimeters, the filler, such as carbon fibers, etc., may also be crushed and the filler, such as carbon fibers, etc., to be recycled have a decreased length, which may adversely affect the properties of the filler.

In addition, according to the observation by the present invention, a two-dimensional or three-dimensional fiber assembly having an organizational shape is required in order that filler, such as carbon fibers, etc., is recycled into a composite material. However, the recovery processes according to the related art has a disadvantage in that such a fiber assembly is disassembled and thus it is difficult to obtain an assembly having an organizational shape. In addition, preparation of an assembly having an organizational shape using short-length fibers, in particular carbon fibers, recycled by the method according to the related art is complicated, difficult and not cost-efficient.

Meanwhile, in order to maintain an organized shape, non-decomposed thermosetting resin was allowed to be remained in a large amount, such as at least 20%, even at least 50% (Japanese Patent Application Publication No. 2013-249386). However, in this case, much of a thermosetting resin is not decomposed, which in turn leads to various limitations in recycles and reutilization of such a thermosetting resin.

Particularly, when a thermosetting resin remains, reprocessing applicability may be decreased and physical properties may be degraded after reprocessing. In addition, when a thermosetting resin composite material used for cars or airplanes, etc. is damaged, the residual thermosetting resin makes it difficult to repair the damaged parts properly during the repair process for the reapplication to cars or airplanes, etc.

DE 10 2013 200 482 A1 describes a process for recovering carbon-, glass- or basalt fibers from a composite by treating the composite at a temperature of less than 300°C and increased pressure in water and in an insert, which allows flushing of the fiber composite component while maintaining shape and/or orientation of the fibers. The method described in said document is carried out in a pressure vessel. The reinforcing fibers, during the reaction, are mechanically maintained in their shape and/or orientation by a perforated metallic insert. The reaction is carried out preferably at a pressure of 5-50 bars and for 2-50 hours.

CN 104592546 A describes a process for recycling a waste carbon fiber/epoxy resin composite material by utilizing a solvent method combined with a pressure method, wherein only one step is needed in the whole process, the waste carbon fiber/epoxy resin composite material is treated at high temperature and high pressure by utilizing a composite acid of inorganic acid and organic acid, a mixed solvent of organic solvents and a compound oxidizing agent, and separation is carried out. Thereby, carbon fibers with a small amount of residual resin are obtained.

### SUMMARY

The present invention is directed to a method for decomposing a cured epoxy resin composite material in the form of a carbon fiber reinforced plastic (CFRP) containing a carbon assembly as disclosed in claim 1.

The present disclosure is directed to providing a method for recovering a fiber assembly by decomposing an epoxy resin composite material in the form of a CFRP in such a manner that the fiber assembly retains its original organizational shape so as to be properly applied again to preparation of a composite material.

In another aspect, the present disclosure is also directed to providing a method for recovering a fiber assembly, which allows the fiber assembly used for an epoxy resin composite material in the form of a CFRP, to undergo minimized deformation of physical shape or properties as well as to retain its original organizational shape, and a fiber assembly recovered by the method and a recycled composite material.

Further, in another aspect, the present disclosure is directed to providing a method for recovering a carbon fiber assembly, which may prevent the problems of degradation of reprocessing applicability and deterioration of physical properties after reprocessing, caused by the remaining of the epoxy resin in the recovered fiber assembly, and may facilitate repairing of a damaged epoxy resin composite material used for cars or airplanes, etc., and a fiber assembly recovered by the method and a recycled composite material.

Further, there is described a method for recovering a carbon fiber assembly by decomposing an epoxy resin composite material containing the carbon fiber assembly, including fixing and compressing the epoxy resin composite material while it is decomposed, wherein the carbon fiber assembly retains its original organizational shape by itself after the thermosetting resin composite material is decomposed.

According to the example embodiments of the present disclosure, a fiber assembly is obtained by decomposing a cured epoxy resin composite material, in the form of CFRP wherein the fiber assembly used for the epoxy resin composite material, in the form of CFRP retains its original organizational shape, and thus may be easily applied again for preparing a composite material.

Further, according to the example embodiments of the present disclosure, the carbon assembly recovered by the method disclosed herein retains its original organizational shape by itself, and substantially no resin remains. Therefore, it is possible to prevent degradation of reprocessing applicability or deterioration of physical properties after reprocessing, caused by the residual epoxy resin. Moreover, when the epoxy resin composite material used for cars or airplanes, etc. is damaged, it is possible to repair the composite material with ease.

### BRIEF DESCRIPTION OF THE DRAWINGS

The above and other aspects, features and advantages of the disclosed example embodiments will be more apparent from the following detailed description taken in conjunction with the accompanying drawings in which:
FIG. 1A is a schematic view illustrating an example of network structure which can be used in example embodiments of the present disclosure, wherein the network structure is a mesh net having lattice-like openings.
FIG. 1B is a schematic view illustrating an example of network structure which can be used in example embodiments of the present disclosure, wherein the network structure is a net having a linear shaped opening.
FIG. 1C is a schematic view illustrating an example of network structure which can be used in example embodiments of the present disclosure, wherein the network structure is a net having a curved shaped opening.
FIG. 1D is a schematic view illustrating an example of network structure which can be used in example embodiments of the present disclosure, wherein the network structure is a net having a circular opening.
FIG. 2A is a photograph of prepreg type carbon fiber reinforced plastic (CFRP) dipped in acetone for 1 minute in Example 1.
FIG. 2B is a photograph of prepreg type carbon fiber reinforced plastic (CFRP) dipped in acetone for 20 minutes in Example 1.
FIG. 3A is a photograph taken before CFRP is dipped into acetone in a Comparative Example to Example 1 wherein fixing with a mesh and clip is not carried out.
FIG. 3B is a photograph taken after CFRP is dipped in acetone for 20 minutes, removed from acetone and dried in a Comparative Example to Example 1 wherein fixing with a mesh and clip is not carried out.
FIG. 4A is a photograph of prepreg type CFRP before it is subjected to a pyrolysis process in Example 2.
FIG. 4B is a photograph of prepreg type CFRP after it is subjected to a pyrolysis process at 300°C for 1 hour in Example 2.
FIG. 5 is a photograph according to Example 3 illustrating a carbon fiber assembly (carbon fiber sheet) (V-CF) before it is cured for preparation of CFRP, CFRP (V-CFRP) after cured, carbon fiber assembly (carbon fiber sheet) (R-CF) recovered after depolymerization, and CFRP (R-CFRP) after re-cured by using the carbon fiber assembly (carbon fiber sheet) recovered.
FIG. 6 shows results of thermogravimetric analysis in Example 3 for CFRP (V-CFRP), carbon fiber assembly (carbon fiber sheet) (R-CF) recovered after depolymerization, and CFRP (R-CFRP) reproduced by using the carbon fiber assembly (carbon fiber sheet) recovered.
FIG. 7A is a photograph illustrating results of scanning electron microscopy for a carbon fiber assembly (carbon fiber sheet) (V-CF) before it is cured for preparation of CFRP in Example 3.
FIG. 7B is a photograph illustrating results of scanning electron microscopy for a carbon fiber assembly (carbon fiber sheet) (R-CF) recovered after depolymerization in Example 3.
FIG. 8 shows results of measurement of tensile strength in Example 3 for a carbon fiber assembly (carbon fiber sheet) (V-CF) before it is cured for preparation of CFRP and a carbon fiber assembly (carbon fiber sheet) (R-CF) recovered after depolymerization.
FIG. 9 shows results of measurement of tensile strength in Example 3 for a CFRP (V-CFRP) and CFRP (R-CFRP) reproduced by using the carbon fiber assembly (carbon fiber sheet) recovered.

### DETAILED DESCRIPTION

Example embodiments are described more fully hereinafter. The invention may, however, be embodied in many different forms and should not be construed as limited to the example embodiments set forth herein. Rather, these example embodiments are provided so that this disclosure will be thorough and complete, and will fully convey the scope of the invention to those skilled in the art. In the description, details of features and techniques may be omitted to more clearly disclose example embodiments.

The terminology used herein is for the purpose of describing particular embodiments only and is not intended to be limiting of the invention. As used herein, the singular forms "a," "an" and "the" are intended to include the plural forms as well, unless the context clearly indicates otherwise. Furthermore, the use of the terms a, an, etc. do not denote a limitation of quantity, but rather denote the presence of at least one of the referenced item. The terms "first," "second," and the like do not imply any particular order, but are included to identify individual elements. Moreover, the use of the terms first, second, etc. do not denote any order or importance, but rather the terms first, second, etc. are used to distinguished one element from another.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

### Definition of Terms

In the present disclosure, fiber assembly means a two-dimensional or three-dimensional fiber assembly having an organizational shape, such as woven fabric, knitted fabric, non-woven fabric, etc. or a three-dimensional structure formed by stacking thereof. In general, such a two-dimensional or three-dimensional fiber assembly forms an assembly by repetition of unit structures.

In the present disclosure, original organizational shape means a two-dimensional or three-dimensional organizational shape of a fiber assembly before the fiber assembly is applied to a thermosetting resin composite material.

In the present disclosure, the expression 'a fiber assembly retains its original organizational shape' means that a fiber assembly recovered from a decomposition process of a thermosetting resin composite material has a two-dimensional or three-dimensional organizational shape before the fiber assembly is subjected to a thermosetting resin composite material.

In the present disclosure, the expression 'a fiber assembly retains its original organizational shape by itself means that the fiber assembly retains its original organizational shape not by the non-decomposed residual thermosetting resin, but by the fiber assembly itself. That is, it means that the fiber assembly is able to retain its original organizational shape without the thermosetting resin.

In the present disclosure, two-dimensional organizational shape or two-dimensional organizational structure means an organizational structure in the form of a plane having a transverse direction and longitudinal direction, such as sheet, or a bulk structure wherein fibers are organized to form bundles.

Particular examples of such a planar organizational structure may include a woven fabric structure in the form of a plane formed by entangling yarns in a transverse direction and longitudinal direction, or a knitted fabric structure in the form of a plane formed by connection of rings in one direction, or a nonwoven fabric structure in the form of a plane formed by mechanical treatment wherein fibers are entangled with each other by using heat and a resin adhesive. Particular examples of the woven fabric structure may include twill weave, satin weave, changed fabric, woolen fabric, multiple woven fabric, double woven fabric, other fabrics, crape fabric, or the like. Particular examples of the knitted fabric structure may include warp knitting or circular knitting, and those of the nonwoven fabric structure may include dry nonwoven fabric, wet nonwoven fabric, needle punched nonwoven fabric, spun-lace nonwoven fabric, spun-bonded nonwoven fabric, melt-blown nonwoven fabric, stitch bonded nonwoven fabric, or the like.

Examples of the bulk organizational structure of fiber bundles may include, for example, tow, such as carbon fiber tow.

When preparing such a two-dimensional network structure, two or more kinds of fibers may be used.

In the present disclosure, three-dimensional structure means a structure formed by stacking two or more two-dimensional structures or a complex structure formed by using two or more two-dimensional structures.

In the present disclosure, fiber means various types of fibers, such as carbon fibers or glass fibers, etc., which may be used for composite materials.

In the present disclosure, reproduced or recycled thermosetting resin composite material means a thermosetting resin composite material prepared by using a fiber assembly recovered through the method for recovering a fiber assembly according to embodiments of the present disclosure.

In the present disclosure, decomposition may include pyrolysis or chemical depolymerization.

In the present disclosure, thermosetting resin composite material means various composite materials, including a thermosetting resin. Similarly, epoxy resin composite material means various composite materials including an epoxy resin. In addition, a thermosetting resin composition material is defined to cover not only a completely cured thermosetting resin but also a material before complete curing or partially cured intermediate (so-called prepolymer or prepreg). The composite material may include various fillers and/or various polymer resins in addition to a thermosetting resin.

In the present disclosure, epoxy resin may be prepared by curing reaction between an epoxy compound having at least two epoxy groups in its molecule and a curing agent. There is no particular limitation in epoxy resin and curing agent. Epoxy resin may include, for example, a multifunctional epoxy resin. In addition, Curing agent may include ones, for example, having an aromatic group or aliphatic group. The curing agent may also be a curing agent having one or more of groups which groups are at least one selected from an amine group, acid anhydride group, imidazole group and mercaptan group.

In the present disclosure, filler means a filler material forming a composite material (e.g. CFRP) together with a thermosetting resin, and particularly may include a fiber assembly, such as a carbon fiber assembly, having an organizational shape.

In the present disclosure, decomposition time means a reaction time required for completely decomposing the thermosetting resin in the thermosetting composite resin material to be decomposed.

In the present disclosure, completely decomposing means that substantially no residue (solid) of a thermosetting resin is present after the decomposition of a thermosetting resin composite material (residual ratio is 5% or less, i.e., decomposition ratio is at least 95%).

In the present disclosure, the decomposition ratio (%) of a thermosetting resin in a thermosetting resin composite material may be calculated as follows. That is, decomposition ratio (%) = [(thermosetting resin content in thermosetting resin composite material - residual thermosetting resin content after decomposition) / (thermosetting resin content in thermosetting resin composite material)] x 100. The residual ratio of a thermosetting resin is 100% - decomposition ratio.

### Description of Example Embodiments

Hereinafter, example embodiments of the present disclosure will be described.

In example embodiments, there is provided a method for recovering a fiber assembly by decomposing a thermosetting resin composite material containing the fiber assembly, including compressing and fixing the thermosetting resin composite material while it is decomposed, wherein the fiber assembly may retain its original organizational shape by itself after the thermosetting resin composite material is decomposed completely. The thermosetting resin composite material being decomposed by the method according to the present invention is a cured epoxy resin composite matieral in the form of a carbon fiber reinforced plastic (CFRP).

In example embodiments, there is provided an apparatus for recovering a fiber assembly from a thermosetting resin composite material, which includes a device for compressing and fixing the thermosetting resin composite material.

According to the example embodiments, even when the thermosetting resin of a thermosetting resin composite material is decomposed completely (substantially no residue of a thermosetting resin is present after decomposition, i.e. residual ratio of a thermosetting resin is 0% or at most 5%), the fiber assembly may retain its original organizational shape. That is, the fiber assembly itself may retain its original organizational shape, not that the thermosetting resins catch the fiber assembly to maintain its organizational shape.

In an example embodiment, in order to help the fiber assembly to retain its original organizational shape by compressing the thermosetting resin composite material during the decomposition thereof, it is advantageous to carry out compressing through the uniform contact on the total surface of the thermosetting resin composite material. In addition, it is suitable that an open portion (i.e., opening) is present to facilitate access of a composition for depolymerization or heat upon compressing.

In a non-limiting example embodiment, when carrying out decomposition of a thermosetting resin composition material, the thermosetting resin composite material may be placed on a device for fixing and compressing having an opening such as a net with fastener, and then fixed and compressed using the net with fastener. For example, in a non-limiting example, the composite material may be placed between nets or at one side of the net, and then the ends thereof may be fixed with a fastener such as a clamp or a binding clip.

Particular examples of the net may include a mesh net having lattice-like openings, a net having a linear shaped opening, a net having a curved shaped opening, and a net having a circular opening, etc., but are not limited thereto. A mesh net that have a lattice-like opening, etc. may be preferably used in that there are the open portions (openings) uniformly in the net and it is possible to carry out compression by the uniform contact on the overall surface of the composite material. For example, such a mesh net may have a lattice size of 0.1 mm to 10 cm.

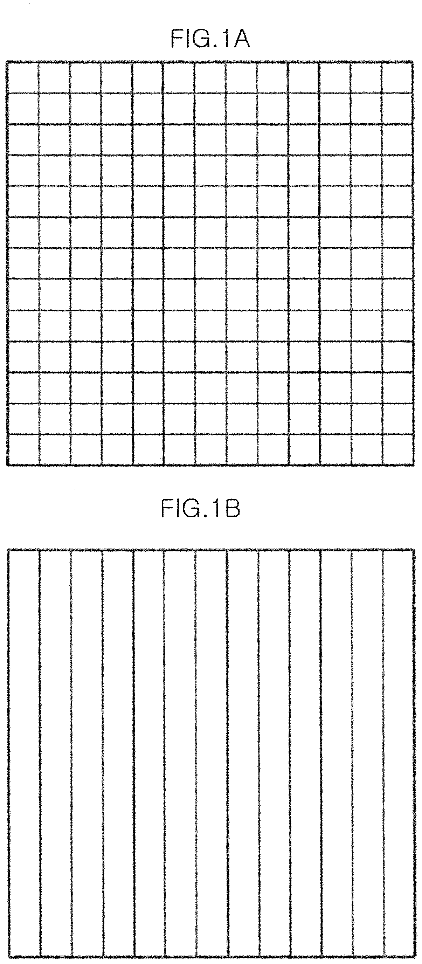

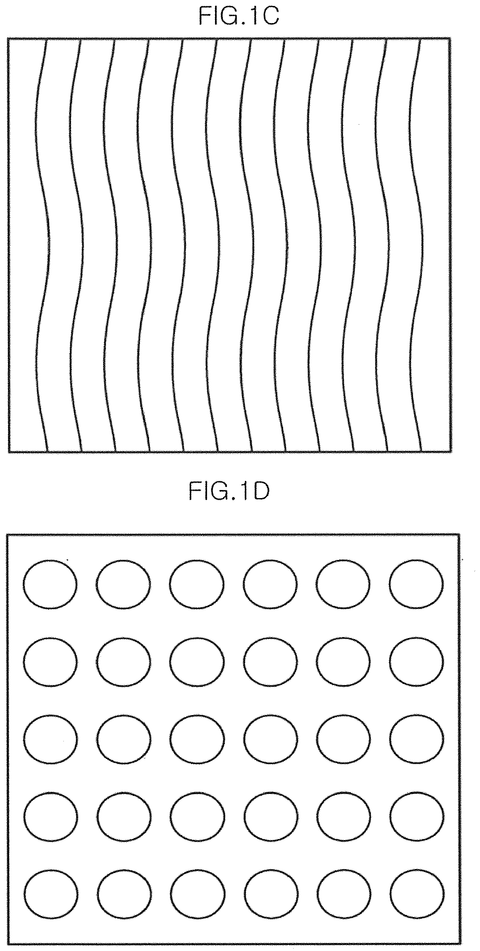

FIG. 1 illustrates examples of network structure which may be used for example embodiments of the present disclosure, wherein FIG. 1A a schematic view illustrating a mesh net having lattice-like openings, FIG. 1B is a schematic view illustrating a net having a linear shaped opening, FIG. 1C a schematic view illustrating a net having a curved shaped opening, and FIG. 1D is a schematic view illustrating a net having a circular opening.

The material forming such a net may be a material, such as metal, ceramic or polymer (e.g. non-degradable polymer in the case of chemical depolymerization) that is not decomposed under the decomposition conditions of the depolymerization composition or pyrolysis temperature to be used, but is stable.

Meanwhile, in example embodiments, the decomposition may be pyrolysis. When carrying out pyrolysis, the thermosetting resin composite material may be compressed and fixed so that the fiber assembly may retain its two-dimensional or three-dimensional organizational shape.

In a non-limiting example embodiment, as described above, a thermosetting resin composition material may be introduced between mesh nets that are not decomposable by heating, and then compressed and fixed by fixing it with a fastener such as a clamp or a binding clip, etc.

In the pyrolysis method according to the related art, a thermosetting resin composite material, such as CFRP etc., may be crushed into a size of several centimeters and heat-treated, or only a part of a thermosetting resin in a thermosetting resin composite material, such as CFRP, etc., is decomposed while a much of the thermosetting resin composition material remains. By contrast, according to example embodiments, such crushing is not carried out. In addition, as for a device for compressing and fixing, a stainless steel mesh net, which is not decomposed by heating during heat treatment, is used to compress and fix the thermosetting resin composite material. Therefore, the thermosetting resin is substantially completely decomposed, and the fiber assembly may be recovered while retaining its original organizational shape by itself.

In a non-limiting example embodiment, the pyrolysis may be at least one selected from the group consisting of thermal decomposition, supercritical fluid pyrolysis, subcritical fluid pyrolysis, fluidized bed incineration pyrolysis, pyrolysis using overheated steam, and pyrolysis using microwaves and hot-temperature nitrogen, but is not limited thereto.

The thermal decomposition is a decomposition process including heating to 300°C or higher under air or inert gas, such as nitrogen or argon. The supercritical fluid pyrolysis is a decomposition process using water at 374°C under 218 atm or higher. The subcritical fluid pyrolysis is a decomposition process using water at 200-374°C under 16-218 atm. The fluidized bed incineration pyrolysis is a decomposition process using silicon dioxide and air or oxygen gas at 450°C or higher. The pyrolysis using overheated steam is a decomposition process using steam at 340°C or higher while interrupting oxygen. The pyrolysis using microwaves and hot-temperature nitrogen is a decomposition process that includes introducing a composite material to a heating member, such as sand, and irradiating microwaves at 3 kW or more under nitrogen gas.

In addition, in example embodiments, the decomposition may be chemical depolymerization. Similarly, when carrying out such chemical depolymerization, the thermosetting resin composite material may be compressed and fixed by fixing the thermosetting resin composite material with a net and a fastener, such as a clamp or binding clip or the like, so that the fiber assembly may retain its two-dimensional or three-dimensional organizational shape.

In example embodiments, the chemical depolymerization may be at least one selected from the group consisting of a decomposition process using a depolymerization composition containing a strong acid, a decomposition process using a depolymerization composition containing an alkali metal salt, a decomposition process using a depolymerization process containing an alkaline earth metal, a decomposition process using a depolymerization process containing an oxidizing agent, a depolymerization process using a strong acid in combination with microwaves (decomposition including irradiation of a strong acid solution, such as aqueous nitric acid solution, with microwaves, i.e. depolymerization in combination with microwaves), a depolymerization process using an oxidizing agent in combination with ionized radiation beams (decomposition including irradiation of an oxidizing agent, such as hydrogen peroxide, with electron beams at 10 MeV or more, i.e. depolymerization in combination with irradiation of ionized radiation beams), but is not limited thereto.

According to a non-limiting example embodiment, the strong acid may be at least one selected from the group consisting of nitrous acid, nitric acid, sulfuric acid, hypofluoric acid, fluorous acid, hydrofluoric acid, perfluoric acid, hypochloric acid, chlorous acid, hydrochloric acid, perchloric acid, hypobromic acid, bromous acid, hydrobromic acid, perbromic acid, hypoiodic acid, iodous acid, hydroiodic acid, periodic acid, acetic acid, sulfuric acid, formic acid, propionic acid, citric acid, methanesulfonic acid, toluenesulfonic acid, benzoic acid and oxalic acid.

In a non-limiting example embodiment, the alkali metal salt may be at least one selected from the group consisting of LiOH, NaOH, KOH, Li₂CO₃, Na₂CO₃, K₂CO₃, Li₃PO₄, Na₃PO₄, K₃PO₄, LiNO₃, NaNO₃, KNO₃, NaOF, NaOCl, NaOBr, NaOI, LiOF, LiOCl, LiOBr, LiOI, KOF, KOCl, KOBr, KOI, NaO₂F, NaO₂Cl, NaO₂Br, NaO₂l, LiO₂F, LiO₂Cl, LiO₂Br, LiO₂l, KO₂F, KO₂Cl, KO₂Br, KO₂l, NaO₃F, NaO₃Cl, NaO₃Br, NaO₃l, LiO₃F, LiO₃Cl, LiO₃Br, LiO₃I, KO₃F, KO₃Cl, KO₃Br, KO₃l, NaO₄F, NaO₄Cl, NaO₄Br, NaO₄I, LiO₄F, LiO₄Cl, LiO₄Br, LiO₄l, KO₄F, KO₄Cl, KO₄Br, KO₄I, NaOCl₆.

In a non-limiting example embodiment, the alkaline earth metal may be at least one selected from the group consisting of Mg(OH)₂, Ca(OH)₂, Sr(OH)₂, Ba(OH)₂, MgCO₃, CaCO₃, SrCO₃, BaCO₃, Ca(OF)₂, Ca(OCl)₂, Ca(OBr)₂, Ca(Ol)₂, MgO₈Cl₂, CaO₈Cl₂, SrO₈Cl₂, BaO₈Cl₂.

In a non-limiting example embodiment, the oxidizing agent may be at least one selected from the group consisting of H₂O₂, F₂, Cl₂, Br₂, I₂, N₂O₄, N₂O₅, O₃, I₂O₅, ICl, NH₄NO₃, KMnO₄, MnO₂, K₂MnO₄, MnSO₄, CrO₃, Na₂Cr₂O₇, K₂Cr₂O₇, ZnCr₂O₇, H₂CrO₄, pyridinium chlorochromate, pyridinium dichromate, V₂O₅, RuCl₃, RuO₂, tetrapropylammonium peruthenate, MoO₃, K₃[Fe(CN)₆], FeCl₃, Fe(NO₃)₃ nonahydrate, MeReO₃, CuCl, Cu(ClO4)₂, Cu(HCO₂)₂Ni(HCO₂)₂, Cu(OAc)₂, OsO₄, (NH₄)₂Ce(NO₃)₆.

In example embodiments, the thermosetting resin composite material may be in the form of prepreg or completely cured thermosetting resin composite material.

In a non-limiting example embodiment, the method may include dipping a prepreg type thermosetting resin composite material into an organic solvent to carry out decomposition, wherein the thermosetting resin composite material is introduced between nets and compressed and fixed with a fastener, such as a clamp or a binding clip or the like.

In a non-limiting example embodiment, the organic solvent may be acetone, 1,4-dioxane, chloroform, diethyl ether, dichloromethane, tetrahydrofuran (THF), ethyl acetate, dimethylformamide (DMF), acetonitrile (MeCN), dimethyl sulfoxide (DMSO), isopropyl alcohol (IPA), N-methyl-2-pyrrolidone (NMP), or the like.

Meanwhile, in example embodiments, when carrying out decomposition, the decomposition reaction conditions may be further controlled in addition to compressing and fixing of the thermosetting resin composite material with a net and a fastener in order to retain the organizational structure. That is, it is advantageous for retaining an original organizational shape to control decomposition reaction time while not applying physical impact, such as agitation or fluidizing.

Particularly, when decomposition reaction time is excessively long, the fiber assembly also begins to be disassembled after the thermosetting resin is decomposed (depolymerized). When decomposition reaction time increases more and more, the organizational structure may be lost completely. Therefore, after determining substantially complete decomposition of a thermosetting resin, decomposition should be stopped. Additionally, it is required to avoid agitation or fluidization during decomposition. This is because application of physical impact, such as agitation or fluidization, makes it difficult for a fiber assembly to retain its organizational structure.

Meanwhile, in example embodiments, there are provided a fiber assembly recovered from a thermosetting resin composite material, which retains its original organizational structure by itself and has a residual ratio of thermosetting resin of 5% or less, and a cured recycled thermosetting resin material obtained by using the same.

In an example embodiment, the original organizational structure of the fiber assembly may be a two-dimensional or three-dimensional structure. For example, the fiber assembly may have a two-dimensional shape, such as woven fabric, knitted fabric or nonwoven fabric, or a three-dimensional structure formed by stacking or combination of two or more such two-dimensional fiber assemblies.

In addition, as mentioned above, the fiber assembly retains its organizational shape by itself, not by the support of the residue of the thermosetting resin. That is, the residual thermosetting resins do not catch the fiber assembly to maintain its organizational shape but the fiber assembly itself may retain its organizational shape.

In addition, the fiber assembly recovered according to the example embodiments of the present disclosure undergoes no change in organizational shape, as compared to the fiber assembly before it is used for a cured thermosetting resin material, such as CFRP, etc. In addition, the fiber assembly undergoes little or minimized change in properties, such as physical shape and tensile strength. Thus, it is possible to obtain a recycled fiber assembly having excellent properties.

For example, as can be seen from Examples, in the case of a recovered carbon fiber assembly, it shows a drop in tensile strength of 13% or less as compared to the raw carbon fiber assembly contained in CFRP. Such a small drop in tensile strength is lower as compared to the decomposition process (decomposition without compressing and fixing according to the present disclosure) providing a drop in tensile strength of 15% or more according to the related art Therefore, it is possible to improve cost-efficiency through recycling while minimizing environmental contamination or pollution.

Hereinafter, the present disclosure will be described in detail through examples. However, the following examples are for illustrative purposes only and it will be apparent to those of ordinary skill in the art that the scope of the present disclosure is not limited by the examples.

### Reference example 1: Recovery of Carbon Fiber Assembly Retaining Network Structure from Prepreg Type Carbon Fiber Reinforced Plastic Using Acetone]

The carbon fiber reinforced plastic (CFRP) used in Example 1 is in the form of prepreg, and is obtained by impregnating a non-cured epoxy resin with a carbon fiber assembly having a organizational structure and partially curing the resultant composite material to provide a solid form. The epoxy resin is prepared by mixing an epoxy compound of bisphenol A diglycidyl ether type with a curing agent containing an aliphatic amine group.

1.5 g of the prepreg CFRP is inserted between two sheets of stainless steel mesh nets, compressed and fixed with a clip, dipped in acetone contained in an open glass container, and allowed to stand at room temperature. In addition, 1.5 g of prepreg CFRP not compressed and fixed with a mesh and clip is also dipped in the same acetone solution and allowed to stand at room temperature.

After 5 minutes, it is shown that the prepreg CFRP is depolymerized completely. Then, the carbon fiber assembly compressed and fixed with a mesh and binding clip is removed and dried.

### Reference example 2: Recovery of Carbon Fiber Assembly Retaining Network Structure from Prepreg Type Carbon Fiber Reinforced Plastic Using Pyrolysis]

1.5 g of the same prepreg type CFRP as used in Example 1 is inserted between two sheets of stainless steel mesh nets, compressed and fixed with a clip, introduced to an electric furnace, heated to 300°C at a rate of 10°C/min. in air, and then the temperature is maintained for 1 hour to carry out pyrolysis.

After carrying out pyrolysis for 1 hour, it is shown that the prepreg CFRP is depolymerized completely. Then, the carbon fiber assembly compressed and fixed with a mesh and a binding clip is removed and dried.

### Inventive example 3: Recovery of Carbon Fiber Assembly Having Network Structure through Depolymerization of Carbon Fiber Reinforced Plastic and Preparation of Recycled Carbon Fiber Reinforced Plastic Using the Same]

The CFRP used in Example 3 is obtained by precuring the same prepreg type CFRP as used in Example 1 at 80°C for 3 hours and curing it at 135°C for 2 hours.

1.5 g of CFRP is introduced to a mixed composition of 1.0 g of a surfactant with 100 mL of acetic acid and heated at 120°C for 24 hours. Next, CFRP is separated, washed with 20 mL of acetone and dried.

Then, 1.5 g of the dried CFRP is introduced to 70 mL of a composition for depolymerization of a cured epoxy resin material including 4 mol/L aqueous sodium hypochlorite solution contained in an open glass container, and allowed to stand at 90°C for 20 hours.

During the depolymerization, CFRP is inserted between two sheets of stainless steel mesh and compressed and fixed with a binding clip to retain the organizational structure of the fiber assembly, and the composition for depolymerization of a cured epoxy resin material is not subjected to agitation or fluidization.

After 5 hours, it is shown by the results of thermogravimetric analysis that the cured epoxy resin material is completely depolymerized, and then the carbon fiber assembly is separated, washed and dried.

Meanwhile, the carbon fiber assembly obtained from Example 3 is used to prepare CFRP again.

Particularly, the same cured epoxy resin material as used in Example 1 is impregnated with the resultant carbon fiber assembly, precured at 80°C for 3 hours and cured at 135°C for 2 hours under the same conditions as Example 3 to provide CFRP.

### [Comparative Example]

Meanwhile, as a Comparative Example to Example 1, depolymerization of prepreg CFRP is carried out, but compressing and fixing with a mesh and a binding clip is not carried out while CFRP is dipped in acetone. The other procedure is the same as Example 1, except that compressing and fixing with a mesh and a clip is not used.

### [Characterization]

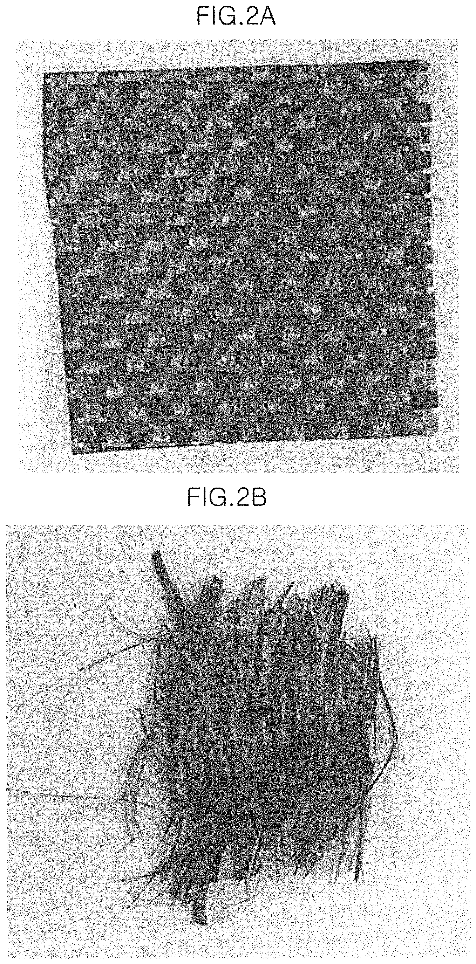

FIG. 2 is a photograph of prepreg type carbon fiber reinforced plastic (CFRP) dipped in acetone for 1 minute (FIG. 2A) and 20 minutes (FIG. 2B) in Example 1.

In particular, FIG. 2A is a photograph of the prepreg CFRP, 1 minute after it is dipped in acetone in Example 1, and FIG. 2B is a photograph of prepreg CFRP after it is dipped in acetone for 20 minutes, compressed and fixed with a mesh and a binding clip, removed from acetone and dried.

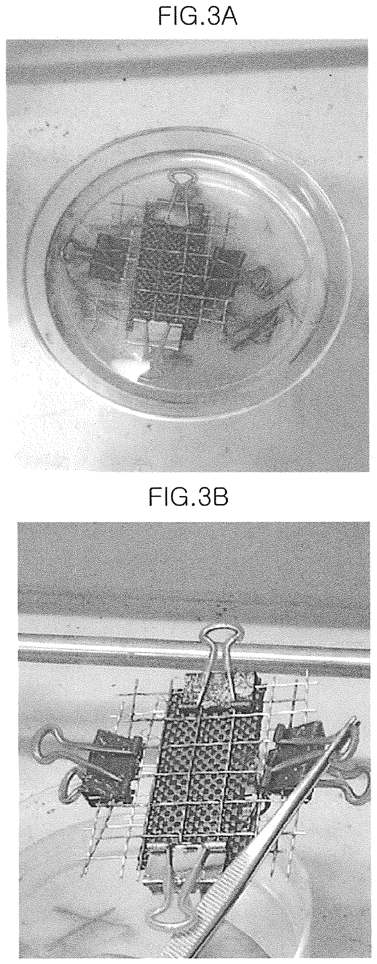

Meanwhile, FIG. 3 is a comparative example to Example 1 and shows an embodiment where no compressing and fixing with a mesh and a clip is carried out, wherein FIG. 3A is a photograph taken before CFRP is dipped in acetone, and FIG. 3B is a photograph taken after CFRP is dipped in acetone for 20 minutes, removed from acetone and dried.

As can be seen from FIG. 3, carbon fibers having no organizational shape and disassembled into separate stands are recovered from the prepreg CFRP which has not been subject to compressing and fixing with a mesh and a binding clip. However, as can be seen from FIG. 2, a carbon fiber assembly that retains its two-dimensional organizational shape by itself even after complete decomposition of epoxy resin is recovered from the prepreg CFRP which has been compressed and fixed with a mesh and a binding clip.

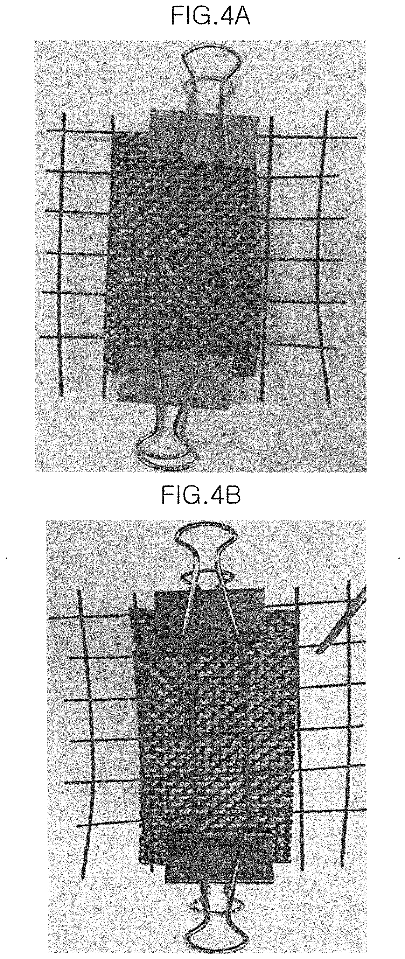

FIG. 4A is a photograph of prepreg type CFRP before it is subjected to a pyrolysis process in Example 2. FIG. 4B is a photograph of prepreg type CFRP after it is subjected to a pyrolysis process at 300°C for 1 hour in Example 2.

As can be seen from FIG. 4, it is possible to recover a carbon fiber assembly that retains its two-dimensional organizational shape by itself even after not only chemical depolymerization using acetone but also after pyrolysis by compressing and fixing the prepreg CFRP with a mesh and binding clip.

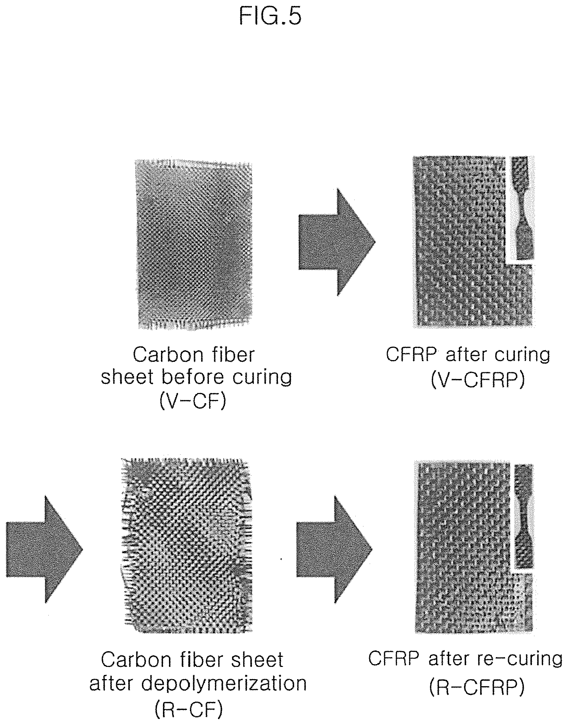

FIG. 5 is a photograph according to Example 3 illustrating a carbon fiber assembly (carbon fiber sheet) (V-CF) before it is cured for preparation of CFRP, CFRP (V-CFRP) after cured, carbon fiber assembly (carbon fiber sheet) (R-CF) recovered after depolymerization, and CFRP (R-CFRP) after re-cured by using the carbon fiber assembly (carbon fiber sheet) recovered.

As can be seen from FIG. 5, the carbon fiber assembly recovered after depolymerization retains its original organizational shape.

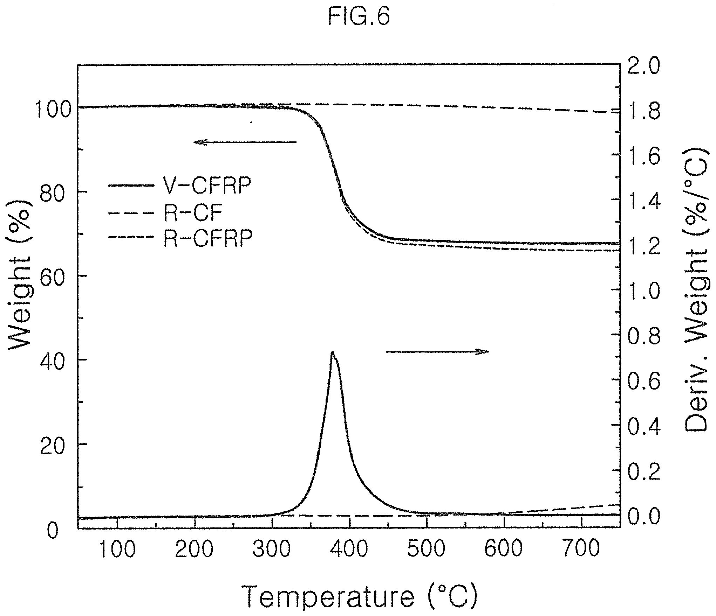

FIG. 6 shows results of thermogravimetric analysis in Example 3 for CFRP (V-CFRP), carbon fiber assembly (carbon fiber sheet) (R-CF) recovered after depolymerization, and CFRP (R-CFRP) reproduced by using the carbon fiber assembly (carbon fiber sheet) recovered.

As can be seen from FIG. 6, the decomposition curve of epoxy resin, which otherwise, appears at about 400°C after depolymerization, disappears. This suggests that the cured epoxy resin material forming CFRP is completely depolymerized through the depolymerization process.

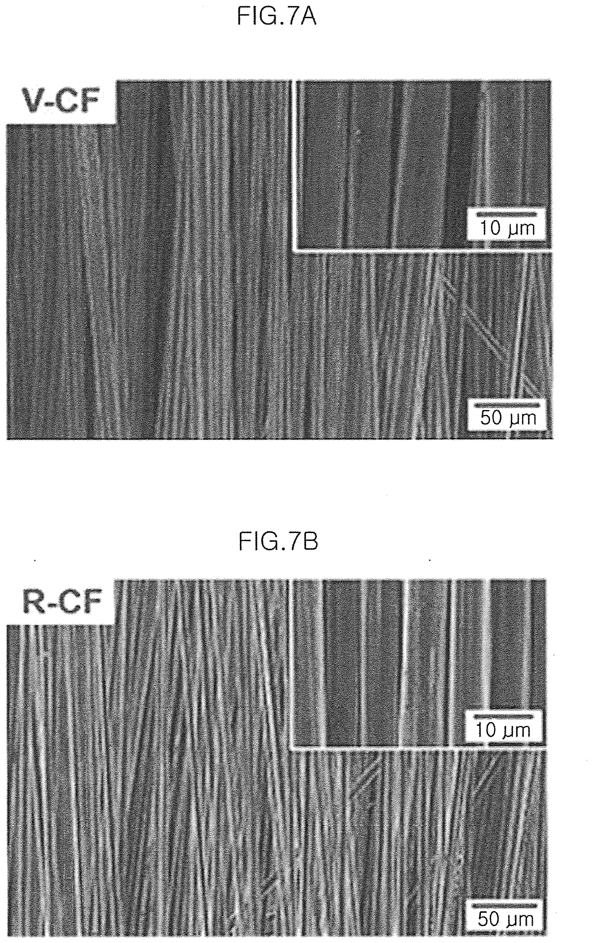

FIG. 7A is a photograph illustrating results of scanning electron microscopy for a carbon fiber assembly (carbon fiber sheet) (V-CF) before it is cured for preparation of CFRP in Example 3.

FIG. 7B is a photograph illustrating results of scanning electron microscopy for a carbon fiber assembly (carbon fiber sheet) (R-CF) recovered after depolymerization in Example 3.

As can be seen from FIG. 7, the carbon fiber assembly undergoes little change in shape. In addition, there is substantially no change in individual fiber strand.

It can be seen from the analysis results of FIG. 7 that it is possible to recover a carbon fiber assembly undergoing little change in physical shape, when CFRP is depolymerized according to the method disclosed herein.

Thus, by carrying out the process for retaining an organizational shape during depolymerization, the recovered fiber assembly may retain its organizational shape as it is, and thus may undergo a minimized change in physical shape or properties. Such a minimized change in physical properties by virtue of the fiber assembly retaining its original organizational shape may be determined by a small change in tensile strength.

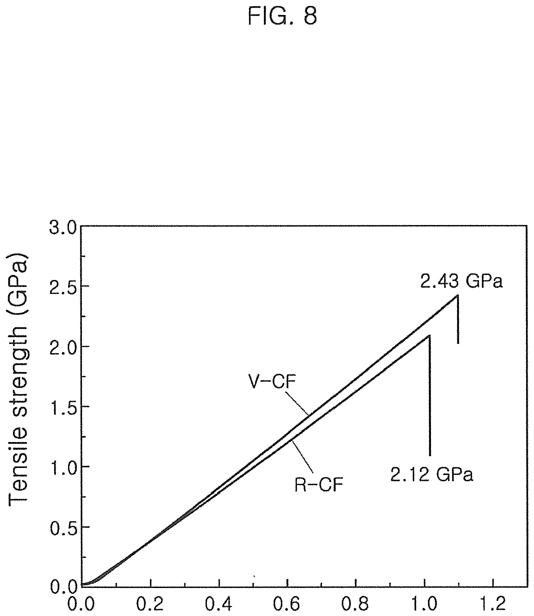

FIG. 8 shows results of measurement of tensile strength in Example 3 for a carbon fiber assembly (carbon fiber sheet) (V-CF) before it is cured for preparation of CFRP and a carbon fiber assembly (carbon fiber sheet) (R-CF) recovered after depolymerization.

As can be seen from FIG. 8, the carbon fiber assembly recovered after depolymerization shows a tensile strength decreased by about 13% or less as compared to the tensile strength of the carbon fiber assembly before depolymerization. This suggests that the depolymerization process according to example embodiments of the present disclosure may allow recovery of a carbon fiber assembly having excellent physical properties. It is though that this is because the depolymerization process minimally affected the carbon fiber assembly, similarly to a change in surface properties.

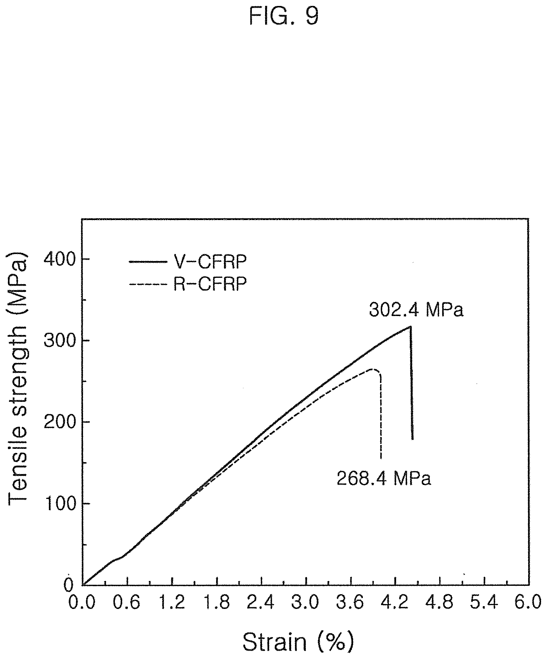

FIG. 9 shows results of measurement of tensile strength in Example 3 for a CFRP (V-CFRP) and CFRP (R-CFRP) reproduced by using the carbon fiber assembly (carbon fiber sheet) recovered.

As can be seen from FIG. 9, when reproducing CFRP by using the recovered carbon fiber assembly, the CFRP has a tensile strength decreased by about 12% or less, as compared to the tensile strength before depolymerization. Considering that the carbon fiber assembly recovered after depolymerization shows a drop in tensile strength of 13% or less, it can be seen that there is a very small drop in tensile strength during the reproduction of CFRP.

## Claims

1. A method for decomposing a cured epoxy resin composite material in the form of a carbon fiber reinforced plastic (CFRP) containing a fiber assembly, comprising the steps of:
- pre-treating the cured epoxy resin composite material by introducing the cured epoxy resin composite material into a mixed composition of a surfactant and acetic acid;
- heating the mixture at 120°C for 24 hours;
- separating the cured epoxy resin composite material;
- washing the cured epoxy resin composite material with acetone, and
- drying the cured epoxy resin composite material;
- depolymerizing the cured epoxy resin composite material by introducing the pre-treated cured epoxy resin composite material into an aqueous sodium hypochlorite solution contained in an open glass container and allowing to stand at 90°C for 20 hours;
wherein, during the depolymerisation, the cured epoxy resin composite material is inserted between two sheets of stainless steel mesh and compressed and fixed with a binding clip to retain the organizational structure of the fiber assembly, wherein the cured epoxy resin composite material is not subjected to agitation or fluidization during the depolymerisation and wherein the fiber assembly retains its organizational shape by itself after the cured epoxy resin composite material is decomposed.

2. The method according to claim 1, wherein the residual ratio of cured epoxy resin in the recovered fiber assembly is 5% or less.

3. The method according to claim 1, wherein the nets and binding clip are not decomposed during the decomposition of the cured epoxy resin composite material.

4. The method according to claim 1, wherein the nets are a net having lattice-like openings, a net having a linear shaped opening, a net having a curved shaped opening, or a net having a circular opening.

## Patentansprüche

1. Verfahren zum Zersetzen eines gehärteten Epoxidharz-Verbundmaterials in Form eines eine Faseranordnung enthaltenden kohlenstofffaserverstärkten Kunststoffes (CFK), wobei das Verfahren die folgenden Schritte umfasst:
- Vorbehandeln des gehärteten Epoxidharz-Verbundmaterials, indem das gehärtete Epoxidharz-Verbundmaterial in eine gemischte Zusammensetzung aus einem Tensid und Essigsäure eingebracht wird;
- Erhitzen des Gemisches bei 120 °C für 24 Stunden;
- Abrennen des gehärteten Epoxidharz-Verbundmaterials;
- Waschen des gehärteten Epoxidharz-Verbundmaterials mit Aceton und
- Trocknen des gehärteten Epoxidharz-Verbundmaterials;
- Depolymerisieren des gehärteten Epoxidharz-Verbundmaterials durch das Einbringen des vorbehandelten gehärteten Epoxidharz-Verbundmaterials in eine in einem offenen Glasbehälter enthaltene wässrige Natriumhypochlorit-Lösung und Ermöglichen, dass es bei 90 °C für 20 Stunden steht;
wobei das gehärtete Epoxidharz-Verbundmaterial während der Depolymerisation zwischen zwei flächige rostfreie Stahlnetze eingefügt, zusammengepresst und mit einer Foldback-Klammer befestigt wird, um die strukturelle Organisation der Faseranordnung zu erhalten, wobei das gehärtete Epoxidharz-Verbundmaterial während der Depolymerisation keiner Bewegung oder Fluidisierung ausgesetzt wird und wobei die Faseranordnung von selbst ihre Organisationsform erhält, nachdem das gehärtete Epoxidharz-Verbundmaterial zersetzt wurde.

2. Verfahren nach Anspruch 1, wobei der Anteil des gehärteten Epoxidharz-Verbundmaterials in der wiedergewonnenen Faseranordnung 5 % oder kleiner ist.

3. Verfahren nach Anspruch 1, wobei die Netze und die Foldback-Klammer während der Zersetzung des gehärteten Epoxidharz-Verbundmaterials nicht zersetzt werden.

4. Verfahren nach Anspruch 1, wobei die Netze ein gitterartige Öffnungen aufweisendes Netz, ein eine geradlinige Öffnung aufweisendes Netz, ein eine kurvenförmige Öffnung aufweisendes Netz oder ein eine kreisförmige Öffnung aufweisendes Netz sind.

## Revendications

1. Procédé pour décomposer un matériau composite à base de résine époxy durcie sous la forme d'un plastique à renfort fibre de carbone (PRFC) contenant un ensemble de fibres, comprenant les étapes suivantes :
- prétraiter le matériau composite à base de résine époxy durcie en introduisant le matériau composite à base de résine époxy durcie dans la composition mixte d'un tensioactif et d'acide acétique ;
- chauffer la mixture à 120 °C pendant 24 heures ;
- séparer le matériau composite à base de résine époxy durcie ;
- laver le matériau composite à base de résine époxy durcie avec acétone, et
- sécher le matériau composite à base de résine époxy durcie ;
- dépolymériser le matériau composite à base de résine époxy durcie en introduisant le matériau composite à base de résine époxy durcie prétraité dans une solution d'hypochlorite de sodium aqueuse contenue dans un récipient en verre ouvert et permettre qu'il reste à 90 °C pendant 24 heures ;
dans lequel, pendant la dépolymérisation, le matériau composite à base de résine époxy durcie est inséré entre deux plaques de treillis en acier inoxydable, compressé et fixé avec un pince-notes pour conserver la structure organisationnelle de l'ensemble de fibres, le matériau composite à base de résine époxy durcie n'étant pas exposé à une agitation ou à une fluidisation pendent la dépolymérisation, et l'ensemble de fibres conservant sa forme organisationnelle par lui-même après la décomposition du matériau composite à base de résine époxy durcie.

2. Procédé selon la revendication 1, la teneur résiduelle en résine époxy durcie dans l'ensemble de fibres récupéré étant 5 % ou moins.

3. Procédé selon la revendication 1, les treillis et le pince-notes n'étant pas décomposés pendant la décomposition du matériau composite à base de résine époxy durcie.

4. Procédé selon la revendication 1, les treillis étant une maille ayant des ouvertures en forme de grille, un treillis ayant une ouverture en forme linéaire, un treillis ayant une ouverture en forme incurvée ou un treillis ayant une ouverture circulaire.
